# EUROPEAN PATENT SPECIFICATION

(11) **EP 2 757 614 B1**
(45) Date of publication and mention of the grant of the patent: **17.01.2018**
(21) Application number: 13176078.7
(22) Date of filing: 11.07.2013
(51) Int. Cl.: H01M 2/30, H01M 2/26

(54) **Secondary battery and assembling method thereof**
Sekundärbatterie und Aufbauverfahren dafür
Batterie secondaire et son procédé d'assemblage

(30) Priority: 18.01.2013 US 201361754468 P; 19.06.2013 US 201313922162
(43) Date of publication of application: 23.07.2014
(73) Proprietor: Samsung SDI Co., Ltd., Yongin-si, Gyeonggi-do (KR)
(72) Inventor: Byun, Sangwon, Yongin-si, Gyeonggi-do (KR); Choi, Sooseok, Yongin-si, Gyeonggi-do (KR); Kim, Hyungsik, Yongin-si, Gyeonggi-do (KR); Oh, Jeongwon, Yongin-si, Gyeonggi-do (KR); Hwang, Yongshik, Yongin-si, Gyeonggi-do (KR)
(74) Representative: Gulde & Partner

(56) References cited:
- EP-A1- 2 355 210
- EP-A1- 2 410 595

## Description

### [DETAILED DESCRIPTION OF THE INVENTION]

### [TECHNICAL FIELD]

The present invention relates to a secondary battery and an assembling method thereof.

### [BACKGROUND ART]

Unlike primary batteries which cannot be recharged, secondary batteries can be repeatedly charged and discharged. Low-capacity secondary batteries, each including a single unit cell, are widely used in small portable electronic devices, such as mobile phones, camcorders, or the like. On the other hand, large-capacity secondary batteries, each including multiple battery cells, may be used as motor driving power sources, such as electric scooters, hybrid electric vehicles, electric vehicles, or the like. EP 2 355 210 A1 and EP 2 410 595 A1 disclose secondary batteries.

The secondary battery can be fabricated into various shapes, such as cylindrical and prismatic shapes. The secondary battery includes an electrode assembly formed by comprising positive and negative electrodes and an insulator separator interposed between them, accommodating the electrode assembly in a case with an electrolyte, and installing a cap plate in the case. Positive and negative terminals are connected to the electrode assembly and are exposed or protruded to the outside through the cap plate.

### [TECHNICAL PROBLEM]

An object of the present invention provide a secondary battery, which can improve safety by reducing heat generated due to electric short circuit between electrodes when a needle-shaped body, such as a nail, passes through the same.

### [TECHNICAL SOLUTION]

The object is achieved according to the invention by a secondary battery according to claim 1 and an assembling method according to claim 14. In particular, the object is achieved by a secondary battery comprising an electrode assembly with a first and a second electrode plate; a case accommodating the electrode assembly in its inner space; a cap plate coupled to and sealing the case; and a first terminal with a first collector terminal, the first collector terminal passing through the cap plate and being electrically conductively connected to the first electrode plate, and with a first terminal plate that is affixed to the first collector terminal, wherein the first collector terminal is electrically connected to the cap plate via the first terminal plate and a fastening plate, the fastening plate being arranged between the cap plate and the first terminal plate, and wherein an insulation layer is arranged on at least one surface of the fastening plate that faces the first collector terminal or the cap plate.

For the method for assembling a secondary battery, the object is achieved by a method comprising the steps of coupling a first collector terminal of a first terminal to a cap plate of the battery, arranging a fastening plate on the cap plate and coupling the fastening plate to the first collector terminal and arranging a first terminal plate on the fastening plate, characterized by the step of arranging an insulation layer between the fastening plate and the cap plate or between the fastening plate the first terminal plate.

At least one of the above and other features and advantages may be realized by providing a secondary battery including a case accommodating an electrode assembly in its inner space; a cap plate coupled to the case and sealing the case; a collector plate coupled to the electrode assembly; a collector terminal coupled to the collector plate and protruding to an upper portion of the cap plate; and a fastening plate positioned on the cap plate; and a terminal plate formed on the fastening plate and coupled to the collector terminal, wherein an insulating layer is formed on at least one surface of the fastening plate.

Here, the insulating layer may be formed on a surface on which the fastening plate makes contact with the cap plate or a surface on which the fastening plate makes contact with the fastening plate.

In addition, the insulating layer may be provided separately from the fastening plate to then be coupled to the fastening plate or may be directly formed on the fastening plate by coating.

In addition, the insulating layer may be formed to face a long side of the fastening plate about a throughhole through which the collector terminal formed in the fastening plate passes.

In addition, the insulating layer may be formed to face an edge of the fastening plate about a throughhole through which the collector terminal formed in the fastening plate passes.

In addition, the insulating layer may be formed to surround a throughhole through which the collector terminal formed in the fastening plate passes.

In addition, the insulating layer may be formed in a concentric circle shape to surround a throughhole through which the collector terminal formed in the fastening plate passes.

In another advantageous embodiment the insulation layer may sectionwise cover an abutment area of the surface of the fastening plate, the abutment area abutting on the first collector terminal or the abutment area abutting on the cap plate, and not covering another section of the abutment area.

In another possible embodiment the fastening may be formed with a through hole through which the first collector terminal passes.

In further advantageous embodiments, the insulation layer may extend between the through hole and at least one side of the fastening plate or from the through hole towards a corner of the fastening plate or may be formed in a concentric circle shape about the through hole.

In another possible embodiment the insulation layer may be coupled to the fastening plate.

In another advantageous embodiment the fastening plate may comprise a form fit element and a counter form fit element may be formed on a surface of the cap plate, the fastening plate being coupled to the cap plate in a rotation rigid manner by the form fit elements. In another possible embodiment the form fit element may be formed as a fastening protrusion and the counter form fit element may be formed as a fastening recess.

In another advantageous embodiment the form fit element may be arranged in a corner of the fastening plate that is free of the insulation layer.

In another possible embodiment the fastening plate may comprise two form fit elements that are arranged in opposite corners of the fastening plate.

In another advantageous embodiment the first collector terminal may comprise a rivet that extends through and is coupled to the first terminal plate.

The rivet may be coupled to the first terminal plate by welding.

In another possible embodiment the secondary battery may comprise a second terminal with a second collector terminal, the second collector terminal passing through the cap plate and being electrically conductively connected to a second electrode plate, and with a second terminal plate that is affixed to the second collector terminal, the second terminal comprising an insulation plate electrically insulating the second collector terminal from the cap plate.

### [ADVANTAGEOUS EFFECTS]

In the secondary battery according to the embodiment of the present invention and the assembling method thereof, when a fastening plate is formed between a terminal plate forming a first terminal and a cap plate, a current path is limited by forming an insulating layer on an area of the fastening plate, thereby ensuring user's safety while reducing heat generated by reducing a current amount even if electric short is generated at the secondary battery due to penetration of a needle-shaped body. The current path may in particular extent from the first electrode to the second electrode via the first collector plate, the first collector terminal, the first terminal plate, the fastening plate, the cap plate, the case and the electric short-circuit caused by e.g. the needle-shaped body penetrating the secondary battery. Thus, the amount of current flowing through the current path as a result of the penetration and the heat generated by the current is reduced by the insulation layer compared to a secondary battery with a fastening plate not having the insulation layer.

### [BRIEF DESCRIPTION OF THE DRAWINGS]

FIG. 1 is a perspective view of a secondary battery according to an embodiment of the present invention;
FIG. 2 is a cross-sectional view of a secondary battery according to an embodiment of the present invention;
FIG. 3 is a perspective view illustrating a state in which a first coupling plate is coupled to a cap plate in the secondary battery according to an embodiment of the present invention;
FIG. 4 is a perspective view illustrating a surface on which the first coupling plate used for the secondary battery according to an embodiment of the present invention makes contact with the cap plate;
FIGS. 5 to 8 sequentially illustrate an assembling method of the secondary battery according to an embodiment of the present invention;
FIG. 9 is a perspective view illustrating a surface on which a first coupling plate used for a secondary battery according to another embodiment of the present invention makes contact with a cap plate;
FIG. 10 is a perspective view illustrating a surface on which a first coupling plate used for a secondary battery according to still another embodiment of the present invention makes contact with a cap plate;
FIG. 11 is a perspective view of a coupling plate of a secondary battery according to another embodiment of the present invention;
FIG. 12 is a perspective view of a cap plate of a secondary battery according to another embodiment, which is not part of, but useful for the understanding of the present invention; and
FIG. 13 is a perspective view of a terminal plate coupled to a coupling plate of a secondary battery according to another embodiment, which is not part of, but useful for the understanding of the present invention.

### [DETAILED DESCRIPTION FOR CARRYING OUT THE INVENTION]

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

Hereinafter, a configuration of a secondary battery according to an embodiment of the present invention will be described.

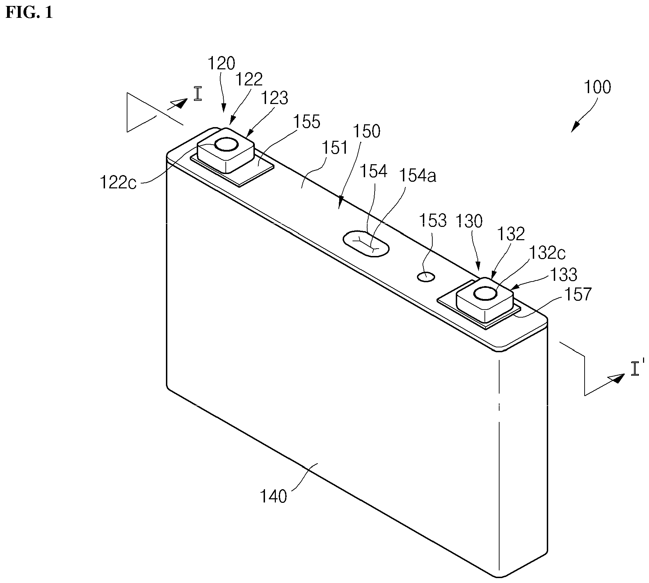

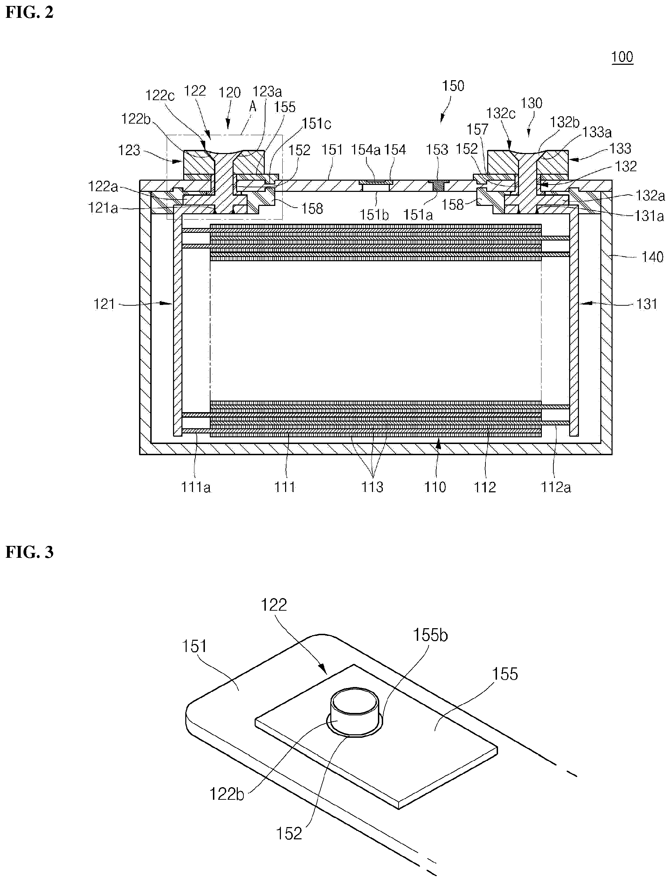

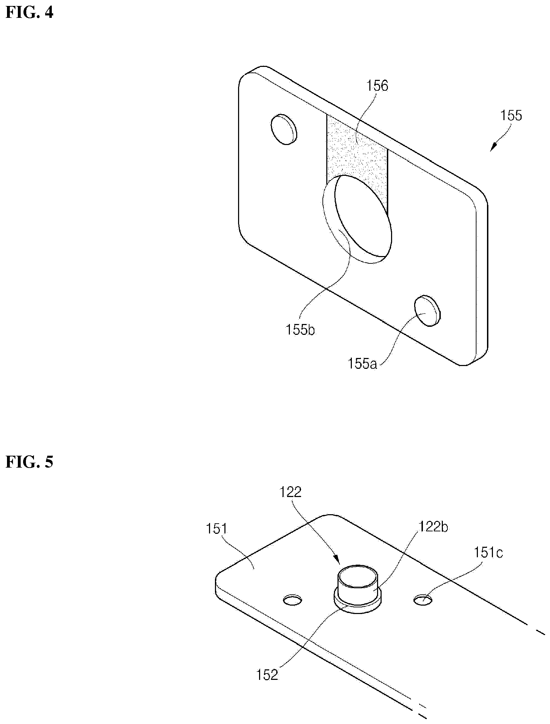

FIG. 1 is a perspective view of a secondary battery according to an embodiment of the present invention, FIG. 2 is a cross-sectional view of a secondary battery according to an embodiment of the present invention, FIG. 3 is a perspective view illustrating a state in which a first coupling plate is coupled to a cap plate in the secondary battery according to an embodiment of the present invention, and FIG. 4 is a perspective view illustrating a surface on which the first coupling plate used for the secondary battery according to an embodiment of the present invention makes contact with the cap plate.

Referring to FIGS. 1 to 4, the secondary battery 100 includes an electrode assembly 110, a first current collector 120, a second current collector 130, a case 140 and a cap assembly 150.

The electrode assembly 110 may be formed by winding a stack of a first electrode plate 111, a separator 113 and a second electrode plate 112, which are formed of thin plate or layers or stacking the first electrode plate 111, the separator 113 and the second electrode plate 112. Here, the first electrode plate 111 may serve as a positive electrode, and the second electrode plate 112 may serve as a negative electrode. The first electrode plate 111 and the second electrode plate 112 may be reversely disposed to have opposite polarities according to selection made by one skilled in the art.

The first electrode plate 111 is formed by coating a first electrode active material, e.g., a transition metal oxide, on a first electrode current collector made of a metallic foil, e.g., an aluminum foil, and includes a first electrode non-coating portion 111a that is not coated with the first active material. The first electrode non-coating portion 111a provides a path of the current flow between the first electrode plate 111 and external portions of the battery. The present invention does not limit the material of the first electrode plate 111 to that listed herein.

The second electrode plate 112 is formed by coating a second electrode active material, e.g., graphite or carbon, on a second electrode current collector 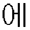 made of a metallic foil, e.g., a copper or nickel foil, and includes a second electrode non-coating portion 112a that is not coated with the second active material. The second electrode non-coating portion 112a provides a path of the current flow between the second electrode plate 112 and external portions of the battery. The present invention does not limit the material of the second electrode plate 112 to that listed herein.

The separator 113, located between the first electrode plate 111 and the second electrode plate 112, interrupts electrical short therebetween, and enables movement of lithium ions. The separator 113 may be formed of a porous membrane using polyethylene (PE), polypropylene (PP), or their composite film. However, the present invention does not limit the material of the separator 113 to those listed herein.

A first terminal 120 and a second terminal 130 electrically connected to the first electrode plate 111 and the second electrode plate 112 are coupled to opposite ends of the electrode assembly 110.

The electrode assembly 110 is substantially accommodated in the case 140 with an electrolyte. The electrolyte may include an organic solvent, such as ethylene carbonate (EC), propylene carbonate (PC), diethyl carbonate (DEC), ethyl methyl carbonate (EMC), or dimethyl carbonate (DMC), and a lithium salt, such as LiPF₆ or LiBF₄. In addition, the electrolyte may be in a liquid, solid or gel phase.

The first terminal 120 is made of a metal or an equivalent thereof and is electrically connected to the first electrode plate 111. The first terminal 120 includes a first collector plate 121, a first collector terminal 122 and a first terminal plate 123.

The first collector plate 121 makes contact with the first electrode non-coating portion 111a protruding to one end of the electrode assembly 110 and is then coupled thereto. The first collector plate 121 may be coupled to the first electrode non-coating portion 111a by welding. The first collector plate 121 is formed to have a vertical region formed along the first electrode non-coating portion 111a and a horizontal region formed to maintain approximately 90 with respect to the vertical region, and a terminal hole 121a is formed in the horizontal region. A portion of the first collector terminal 122 is inserted into and coupled to the terminal hole 121a. The first collector plate 121 is made of aluminum or an aluminum alloy, but the present invention does not limit the material of the first collector plate 121 thereto.

The first collector terminal 122 passes through the cap plate 151 and upwardly protrudes and extends a predetermined length and is electrically connected to the first collector plate 121 at a lower portion of the cap plate 151. Like the first collector plate 121, the first collector terminal 122 is made of aluminum or an aluminum alloy, but the present invention does not limit the material of the first collector terminal 122 thereto. The first collector terminal 122 includes a flange 122a extending in a horizontal direction along the first collector plate 121, a rivet 122b upwardly protruding and coupled to the first terminal plate 123, and a coupling portion 122c formed along the edge of the rivet 122b.

The flange 122a is formed in a horizontal direction along the first collector plate 121. In addition, the flange 122a vertically protrudes from a region of the first collector terminal 122 to then be inserted into the terminal hole 121a of the first collector plate 121. In addition, welding is performed on a peripheral portion of the terminal hole 121a, thereby coupling the first collector terminal 122 to the first collector plate 121.

The rivet 122b is formed to upwardly protrude from the flange 122a. The rivet 122b is riveted while passing through the first terminal plate 123, and mechanically and electrically couples the first collector terminal 122 to the first terminal plate 123. In addition, welding is performed on a peripheral portion of the rivet 122b to form a coupling portion 122c, thereby maintaining the rivet 122b at a more tightly coupled state.

The first terminal plate 123 is made of aluminum or an aluminum alloy. The first terminal plate 123 has a sloping surface 123a recessed from an upper portion of the first terminal plate 123. When the rivet 122b of the first collector terminal 122 is riveted, it is easily compressed along the sloping surface 123a, thereby increasing a coupling area between the first terminal plate 123 and the rivet 122b by a surface contact. Accordingly, the first terminal plate 123 may be mechanically and electrically connected to the first collector terminal 122.

Meanwhile, as will later be described, a fastening plate 155 is formed between the first terminal plate 123 and the cap plate 150. Therefore, the first terminal plate 123 and the cap plate 150 have the same polarity, e.g., a first polarity. Here, an amount of current flowing between the first terminal plate 123 and the cap plate 150 is controlled, i.e. restrained, according to the location and area of the insulating layer 156 formed in the fastening plate 155, thereby reducing heat generated when an electric short occurs between electrodes due to a needle-shaped body.

The second terminal 130 is shaped to correspond to the first terminal 120. The second terminal 130 is electrically connected to the second electrode plate 112 of the electrode assembly 110. The second terminal 130 may include a second collector plate 131, a second collector terminal 132 and a second terminal plate 133.

The second collector plate 131 may be made of copper or a copper alloy, but the present invention does not limit the material of the second collector plate 131 thereto. The second collector plate 131 is substantially 'L' shaped and is coupled to the second electrode plate 112 of the electrode assembly 110. In addition, the second collector plate 131 includes a terminal hole 131a, and the second collector terminal 132 is inserted into the terminal hole 131a to then be welded thereto.

The second collector terminal 132 is connected to the second collector plate 131 to then protrude to an upper portion of the cap plate 155, and includes a flange 132a, a rivet 132b and a coupling portion 132c to correspond to the first collector terminal 122.

The second terminal plate 133 is coupled to the second collector terminal 132 and includes a sloping surface 133a, by which a coupling force between the second collector terminal 132 and the rivet 132b. Meanwhile, the second terminal plate 133 is coupled to the cap plate 151 through the insulation plate 157. Therefore, the second terminal plate 133 having a second polarity is electrically disconnected from the cap plate 151 having the first polarity, thereby preventing electric short between electrodes at ordinary times.

The case 140 is made of a conductive metal such as aluminum, an aluminum alloy or nickel plated steel and is substantially shaped of a hexahedron having an opening into which the electrode assembly 110, the first terminal 120 and the second terminal 130 are inserted and placed. While FIG. 2 shows the case 140 and the cap plate 151 in an assembled state and the opening is not shown, a peripheral portion of the case 140 contacting the cap plate 151 is a substantially opened portion. In the secondary battery 100 according to the embodiment of the present invention, the first terminal 120 is electrically connected to the cap plate 151 and the case 140, so that the case 140 has the same polarity as the first terminal 120, e.g., a first polarity. In addition, since the inner surface of the case 140 is basically insulated, the second non-coating portion 112a of the electrode assembly 110 having the second polarity and the second terminal 130 may be electrically isolated from each other even when they come into contact with each other due to movement, thereby preventing electric short from occurring at ordinary times.

The cap assembly 150 is coupled to the case 140. Specifically, the cap assembly 150 includes a cap plate 151, a fastening plate 155, a coating 156, and an insulation plate 157. In addition, the cap assembly 150 may further include a gasket 152, a plug 153, a safety vent 154, and an insulating member 158.

The cap plate 151 seals the opening of the case 140 and may be made of the same material as the case 140. As an example, the cap plate 151 may be coupled to the case 140 by laser welding. Here, since the cap plate 151 is electrically connected to the first terminal 130, the cap plate 151 and the case 140 have the same polarity, e.g., a first polarity.

The seal gasket 152 is formed between each of the first collector terminal 122 and the second collector terminal 132 and the cap plate 151 using an insulating material, and seals portions between each of the first collector terminal 122 and the second collector terminal 132 and the cap plate 151. The seal gasket 152 prevents external moisture from penetrating into the secondary battery 100 or prevents an electrolyte accommodated in the secondary battery 100 from flowing outside.

The plug 153 seals an electrolyte injection hole 151a of the cap plate 151. The safety vent 154 is installed in a vent hole 151b of the cap plate 151 and a notch 154a may be formed in the safety vent 154 to be opened at a predetermined pressure.

The fastening plate 155 is formed between the cap plate 151 and the first terminal plate 123. The fastening plate 155 may be made of the same material as the cap plate 151, for example, aluminum or an aluminum alloy, but the present invention does not limit the material of the fastening plate 155 to those listed herein.

In addition, the fastening plate 155 includes a fastening protrusion 155a, and a fastening recess 151c is formed to be located to correspond to the cap plate 151. Therefore, when the fastening plate 155 is coupled to the cap plate 151, the fastening protrusion 155a is coupled to the fastening recess 151c to be inserted thereto. Therefore, the fastening plate 155 is stably coupled to the cap plate 151, thereby preventing the fastening plate 155 from moving during manufacture or use. In addition, the first collector terminal 122 and the gasket 152 pass through a throughhole 155b formed in the fastening plate 155, so that the first collector terminal 122 may be coupled to the first terminal plate 123.

The fastening plate 155 may have the same polarity as the first terminal plate 123 and the cap plate 151, e.g., a first polarity, and provides a path of current flow between the fastening plate 155 and each of the first terminal plate 123 and the cap plate 151.

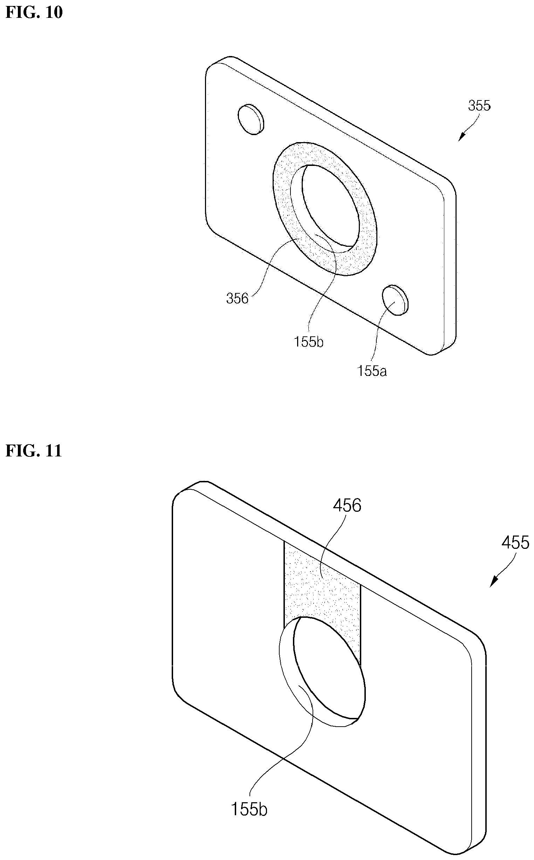

The insulating layer 156 is formed on one surface of the fastening plate 155. More specifically, the insulating layer 156, as shown in Fig. 4, may be formed on a first surface on which the fastening plate 155 makes contact with the cap plate 151. Alternatively, an insulating layer 456, as shown in Fig. 11, may be formed on a second surface on which the fastening plate 455 makes contact with the first terminal plate 123, the second surface opposite to the first surface, according to selection made by one skilled in the art.

The insulating layer 156 may be formed vertically to face a long side of the fastening plate 155 about the throughhole 155b of the fastening plate 155.

The insulating layer 156 is made of an electrically insulating material and controls, restrains, reduces or decreases a cross sectional area the fastening plate 155 and the cap plate 15, through which the current flows. That is to say, the insulating layer 156 increases a resistance component in the path of current flow and impedes the flow of current. Therefore, when electric short occurs by a needle-shaped body passing through the case 140 and a large amount of current flows, the insulating layer 156 may reduce the amount of current flowing between the fastening plate 155 and the cap plate 151. Therefore, the heat generated by the flow of current in an event of electric short can be reduced, and user's safety can be ensured.

The insulating layer 156 may be separately provided to then be coupled to the fastening plate 155. Alternatively, the insulating layer 156 may be directly formed on the fastening plate 155 by coating.

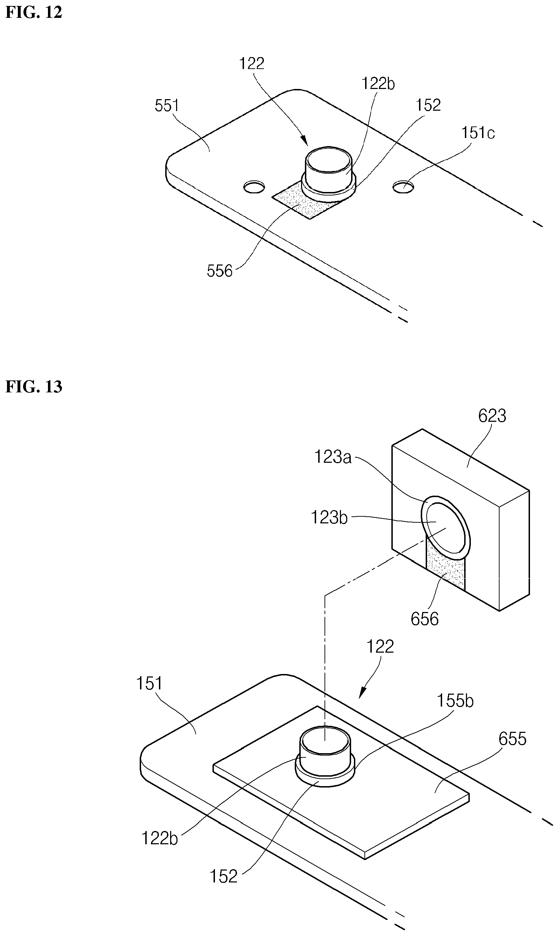

In one embodiment, as shown in FIG. 12, an insulating layer 556 may be formed on (e.g., directly formed on) the cap plate 551 or, as shown in FIG. 13, an insulating layer 656 may be formed on a first terminal plate 623, such as by coating, at a location contacting the fastening plate 155, 455 or 655.

The insulation plate 157 is formed between the second terminal plate 133 and the cap plate 151. The insulation plate 157 may be shaped to correspond to the fastening plate 155. However, the insulation plate 157 is formed using an electrically insulating material, and the second terminal plate 133 having a second polarity is electrically disconnected from the cap plate 151 having a first polarity, thereby preventing electric short from occurring between electrodes.

The insulating member 158 makes close contact with the cap plate 151. Moreover, the insulating member 155 may also make close contact with the gasket 152. The insulating member 155 makes the first terminal plate 123 and the second terminal plate 133 closely contact the cap plate 151, thereby coupling the first terminal plate 123 and the second terminal plate 133 to the cap plate 151. Specifically, the insulating member 158 is formed between the second collector plate 131 and the cap plate 151 and between the case 140 and the second collector plate 131, thereby preventing unnecessary electric short.

As described above, in the secondary battery 100 according to the embodiment of the present invention, when the fastening plate 155 is formed between the terminal plate 123 forming the first terminal 120 and the cap plate 151, a current path is limited by forming the insulating layer 156 on a surface of the fastening plate 155, where the fastening plate 155 makes contact with the cap plate 151, thereby ensuring user's safety while reducing heat generated by reducing a current amount even if electric short is generated at the secondary battery due to penetration of a need-shaped body.

Hereinafter, an assembling method of a secondary battery according to an embodiment of the present invention will be described.

FIGS. 5 to 8 sequentially illustrate an assembling method of the secondary battery according to an embodiment of the present invention.

First, referring to FIG. 5, the first collector terminal 122 is coupled to the cap plate 151. The rivet 122b of the first collector terminal 122, together with the gasket 152, passes through the cap plate 151 and protrudes to be substantially perpendicular to a top surface of the cap plate 151. Here, the rivet 122b may be electrically disconnected from the cap plate 151 by the gasket 152. A fastening recess 151c is formed on a surface of the cap plate 151, and the fastening recess 151c is then coupled to the fastening protrusion 155a formed on a bottom surface of the fastening plate 155 to correspond to the fastening plate 155.

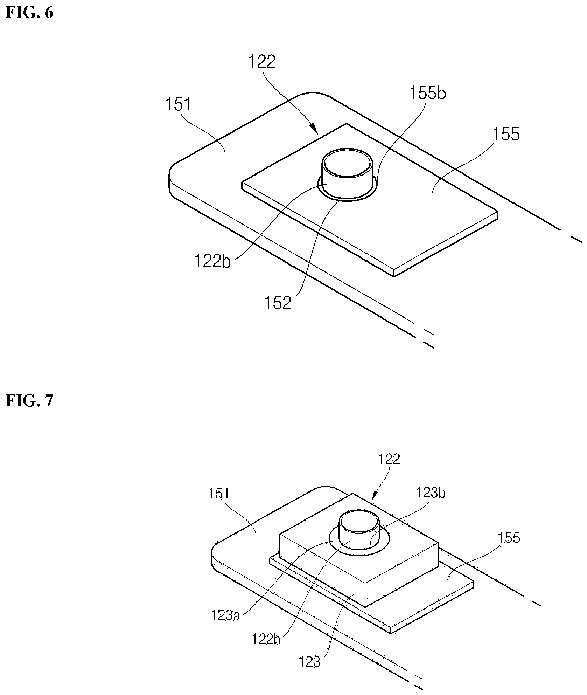

Next, referring to FIG. 6, the fastening plate 155 is coupled to the first collector terminal 122. The fastening protrusion 155a is formed in the fastening plate 155 and is coupled to the fastening recess 151c of the cap plate 151. Therefore, the fastening plate 155 may be fixed to the top surface of the cap plate 151 so as not to rotate about the first collector terminal 122.

In addition, as described above, the insulating layer 156 may be formed on the first surface on which the fastening plate 155 makes contact with the cap plate 151. Therefore, an amount of the current flowing between the fastening plate 155 and the cap plate 151 may be reduced by the insulating layer 156, thereby reducing the heat generated when electric short occurs to the secondary battery.

Referring to FIG. 7, the first terminal plate 123 is coupled to the first collector terminal 122. In other words, the first terminal plate 123 has a throughhole 123b formed at a substantially central area and is coupled to the first collector terminal 122 while the first collector terminal 122 passes through the throughhole 123b. Here, the first terminal plate 123 makes close contact with the fastening plate 155. Therefore, the first terminal plate 123 is electrically connected to the cap plate 151 by the fastening plate 155.

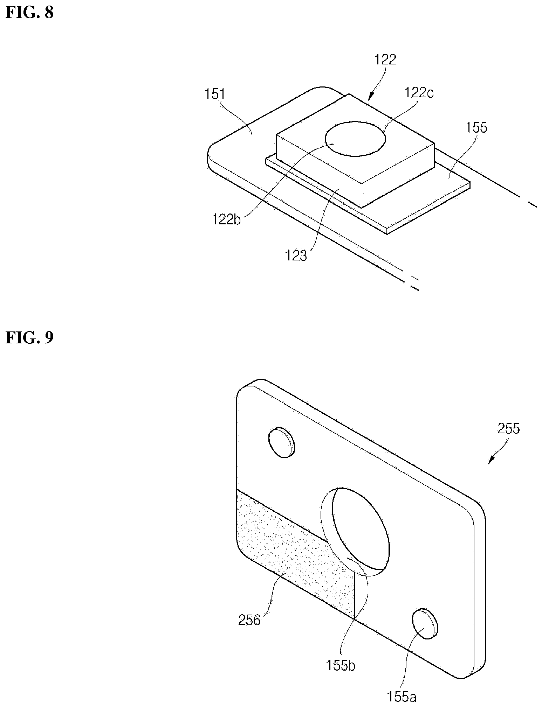

Referring to FIG. 8, the rivet 122b of the first collector terminal 122 is riveted by a riveting tool. Here, the rivet 122b is riveted along the sloping surface 123a of the first terminal plate 123. Therefore, the rivet 122b is formed inside a space formed by the sloping surface 123a of the first terminal plate 123. Therefore, the rivet 122b of the first collector terminal 122 is firmly fixed to the first terminal plate 123 mechanically and electrically.

Next, welding is performed along the boundary between the rivet 122b of the first collector terminal 122 and the first terminal plate 123, thereby forming the coupling portion 122c. As the result of riveting, the boundary between the rivet 122b and the first terminal plate 123 may be formed in a circular shape. In this case, the welding may be performed along the boundary by circumferential welding. The coupling portion 122c formed by welding mechanically and electrically couples the rivet 122b to the first terminal plate 123 in a more perfect manner. As a result, the first collector terminal 122 having the rivet 122b is stably coupled to the first terminal plate 123.

In addition, although not shown, riveting and welding are performed between the second collector terminal 132 and the second terminal plate 133, thereby stably coupling the second collector terminal 132 to the second terminal plate 133. Next, the cap plate 151 may be coupled to the case 140 by welding, an electrolyte may be injected into the case 140 through the electrolyte injection hole 151a of the cap plate 151, and the electrolyte injection hole 151a may be closed through the plug 153.

Hereinafter, a configuration of a secondary battery according to another embodiment of the present invention will be described.

FIG. 9 is a perspective view illustrating a surface on which a first coupling plate used for a secondary battery according to another embodiment of the present invention makes contact with a cap plate.

Referring to FIG. 9, the secondary battery according to another embodiment of the present invention includes a fastening plate 255 and an insulating layer 256. Since the secondary battery according to another embodiment of the present invention is substantially the same as the secondary battery according to the previous embodiment, except for configurations of the fastening plate 255 and the insulating layer 256, and the following description will focus on the fastening plate 255 and the insulating layer 256.

The insulating layer 256 may be formed to extend toward one corner of the fastening plate 255 about the throughhole 155b of the fastening plate 255. In particular, the insulating layer 256 may be formed to extend toward a corner of the fastening plate 255 in which the fastening protrusion 155a is not formed. In consideration of a step difference of the fastening protrusion 155a, when the insulating layer 256 is formed at a region where the fastening protrusion 155a is not formed, it can be stably coupled to the fastening plate 255 more easily.

In addition, in the secondary battery according to another embodiment of the present invention, a fastening area can be increased such that the insulating layer 256 is disposed to face the corner of the fastening plate 155 where the fastening protrusion 155a is not formed, thereby reducing an amount of current flowing when electric short occurs between the electrodes while reducing the heat generated.

Hereinafter, a configuration of a secondary battery according to still another embodiment of the present invention will be described.

FIG. 10 is a perspective view illustrating a surface on which a first coupling plate used for a secondary battery according to still another embodiment of the present invention makes contact with a cap plate.

Referring to FIG. 10, the secondary battery according to still another embodiment of the present invention includes a fastening plate 355 and an insulating layer 356. Since the secondary battery according to still another embodiment of the present invention is substantially the same as the secondary battery according to the previous embodiment, except for configurations of the fastening plate 355 and the insulating layer 356, and the following description will focus on the fastening plate 355 and the insulating layer 356.

The insulating layer 356 may be formed to surround a throughhole 155b of the fastening plate 355. More specifically, the insulating layer 356 may be formed in a concentric circle shape about the throughhole 155b. therefore, the insulating layer 356 blocks the flow of current around the throughhole 155b where a relatively large amount of current may flow, thereby more effectively blocking the flow of current.

Therefore, in the secondary battery according to still another embodiment of the present invention, the current amount can be further reduced by forming the insulating layer 356 around the throughhole 155b of the fastening plate 355, and the heat generated in an event of electric short can be effectively reduced.

The current path may in particular extent from the first electrode 111 to the second electrode 112 via the first collector plate 121, the first collector terminal 122, the first terminal plate 123, the fastening plate 155, the cap plate 151, the case 140 and the electric short-circuit caused by e.g. the needle-shaped body penetrating the secondary battery. Thus, the amount of current flowing through the current path as a result of the penetration and the heat generated by the current is reduced by the insulation layer 156, 256, 356 compared to a secondary battery with a fastening plate not having the insulation layer 156, 256, 356.

**<DESCRIPTION OF THE SYMBOLS IN THE DRAWINGS>**

| | |
|---|---|
| 100: Secondary battery | 110: Electrode assembly |
| 120: First terminal | 121: First collector plate |
| 122: First collector terminal | 123: First terminal plate |
| 130: Second terminal | 131: Second collector plate |
| 132: Second collector terminal | 133: Second terminal plate |
| 140: Case | 150: Cap assembly |
| 151: Cap plate | 152: Gasket |
| 155, 255, 355: Fastening plate | 156, 256, 356: Insulating layer |
| 157: Insulation plate | 158: Insulating member |

## Claims

1. Secondary battery comprising:
an electrode assembly (110) with a first (111) and a second (112) electrode plate;
a case (140) accommodating the electrode assembly (110) in its inner space;
a cap plate (151) coupled to and sealing the case (140); and
a first terminal (120) with a first collector terminal (122), the first collector terminal (122) passing through the cap plate (151) and being electrically conductively connected to the first electrode plate (111), and with a first terminal plate (123) that is affixed to the first collector terminal (122),
wherein the first collector terminal (122) is electrically connected to the cap plate (151) via the first terminal plate (123) and a fastening plate (155), the fastening plate (155) being arranged between the cap plate (151) and the first terminal plate (123), and
wherein an insulation layer (156) is arranged on at least one surface of the fastening plate (155) that faces the cap plate (151), **characterized in that** the insulation layer (156) sectionwise covers an abutment area of the surface of the fastening plate (155), the abutment area abutting on the cap plate (151), and not covering another section of the abutment area.

2. Secondary battery according to claim 1, **characterized in that** the fastening plate (155) is formed with a through hole (155b) through which the first collector terminal (122) passes.

3. Secondary battery according to claim 2, **characterized in that** the insulation layer (156) extends between the through hole (155b) and at least one side of the fastening plate (155).

4. Secondary battery according to claim 2, **characterized in that** the insulation layer (256) extends from the through hole (155b) towards a corner of the fastening plate (155).

5. Secondary battery according to claim 2, **characterized in that** the insulation layer (356) is formed in a concentric circle shape about the through hole (155b).

6. Secondary battery according to any of claims 1 to 5, **characterized in that** the insulation layer (156, 256, 356) is coupled to the fastening plate (155).

7. Secondary battery according to any of claims 1 to 6, **characterized in that** the fastening plate (155) comprises a form fit element (155a) and that a counter form fit element (151c) is formed on a surface of the cap plate (151), the fastening plate (155) being coupled to the cap plate (151) in a rotation rigid manner by the form fit elements (155a, 151c).

8. Secondary battery according to claim 7, **characterized in that** the form fit element (155a) is formed as a fastening protrusion (155a) and the counter form fit element is formed as a fastening recess (151c).

9. Secondary battery according to claim 7 or 8, **characterized in that** the form fit element (155a) is arranged in a corner of the fastening plate (155) that is free of the insulation layer (156, 256, 356).

10. Secondary battery according to any of claims 7 to 9, **characterized in that** the fastening plate (155) comprises two form fit elements (155a) that are arranged in opposite corners of the fastening plate (155).

11. Secondary battery according to any of claims 1 to 10, **characterized in that** the first collector terminal (122) comprises a rivet (122b) that extends through and is coupled to the first terminal plate (123).

12. Secondary battery according to claim 11, **characterized in that** the rivet (122b) is coupled to the first terminal plate (123) by welding.

13. Secondary battery according to any of claims 1 to 12, **characterized in that** the battery comprises a second terminal (130) with a second collector terminal (132), the second collector terminal (132) passing through the cap plate (151) and being electrically conductively connected to a second electrode plate (112), and with a second terminal plate (133) that is affixed to the second collector terminal (132), the second terminal comprising an insulation plate (157) electrically insulating the second collector terminal (132) from the cap plate (151).

14. Method for assembling a secondary battery, the method comprising the steps of coupling a first collector terminal (122) of a first terminal (120) to a cap plate (151) of the battery, arranging a fastening plate (155) on the cap plate (151) and coupling the fastening plate (155) to the first collector terminal (122) and arranging a first terminal plate (123) on the fastening plate (155), the method comprising the step of arranging an insulation layer (156, 256, 356) between the fastening plate (155) and the cap plate (151), **characterized in that** the insulation layer (156) sectionwise covers an abutment area of the surface of the fastening plate (155), the abutment area abutting on the cap plate (151), and not covering another section of the abutment area.

## Patentansprüche

1. Sekundärbatterie, aufweisend:
eine Elektrodenanordnung (110) mit einer ersten (111) und einer zweiten (112) Elektrodenplatte;
ein Gehäuse (140), das die Elektrodenanordnung (110) in ihrem Innenraum aufnimmt,
eine Deckplatte (151), die mit dem Gehäuse (140) gekoppelt ist und dieses abdichtet; und
einen ersten Anschluss (120) mit einem ersten Kollektoranschluss (122), wobei der erste Kollektoranschluss (122) durch die Deckplatte (151) hindurchgeht und elektrisch leitend mit der ersten Elektrodenplatte (111) verbunden ist, und mit einer ersten Anschlussplatte (123), die am ersten Kollektoranschluss (122) befestigt ist,
wobei der erste Kollektoranschluss (122) über die erste Anschlussplatte (123) und eine Befestigungsplatte (155) elektrisch mit der Deckplatte (151) verbunden ist, wobei die Befestigungsplatte (155) zwischen der Deckplatte (151) und der ersten Anschlussplatte (123) angeordnet ist, und
wobei eine Isolierschicht (156) auf zumindest einer Oberfläche der Befestigungsplatte (155), die der Deckplatte (151) zugewandt ist, angeordnet ist, **dadurch gekennzeichnet, dass** die Isolierschicht (156) einen Anlagebereich der Oberfläche der Befestigungsplatte (155) abschnittweise bedeckt, wobei der Anlagebereich an der Deckplatte (151) anliegt, und wobei sie einen anderen Abschnitt des Anlagebereichs nicht bedeckt.

2. Sekundärbatterie nach Anspruch 1, **dadurch gekennzeichnet, dass** die Befestigungsplatte (155) mit einem Durchgangsloch (155b), durch das der erste Kollektoranschluss (122) hindurchgeht, ausgebildet ist.

3. Sekundärbatterie nach Anspruch 2, **dadurch gekennzeichnet, dass** sich die Isolierschicht (156) zwischen dem Durchgangsloch (155b) und zumindest einer Seite der Befestigungsplatte (155) erstreckt.

4. Sekundärbatterie nach Anspruch 2, **dadurch gekennzeichnet, dass** sich die Isolierschicht (256) vom Durchgangsloch (155b) zu einer Ecke der Befestigungsplatte (155) erstreckt.

5. Sekundärbatterie nach Anspruch 2, **dadurch gekennzeichnet, dass** die Isolierschicht (356) in einer konzentrischen Kreisform um das Durchgangsloch herum (155b) ausgebildet ist.

6. Sekundärbatterie nach einem der Ansprüche 1 bis 5, **dadurch gekennzeichnet, dass** die Isolierschicht (156, 256, 356) mit der Befestigungsplatte (155) gekoppelt ist.

7. Sekundärbatterie nach einem der Ansprüche 1 bis 6, **dadurch gekennzeichnet, dass** die Befestigungsplatte (155) ein Formschlusselement (155a) aufweist, und dass ein Gegenformschlusselement (151c) auf einer Oberfläche der Deckplatte (151) ausgebildet ist, wobei die Befestigungsplatte (155) durch die Formschlusselemente (155a, 151c) drehsteif mit der Deckplatte (151) gekoppelt ist.

8. Sekundärbatterie nach Anspruch 7, **dadurch gekennzeichnet, dass** das Formschlusselement (155a) als Befestigungsvorsprung (155a) ausgebildet ist und das Gegenformschlusselement als Befestigungsausnehmung (151c) ausgebildet ist.

9. Sekundärbatterie nach Anspruch 7 oder 8, **dadurch gekennzeichnet, dass** das Formschlusselement (155a) in einer Ecke der Befestigungsplatte (155), die frei von der Isolierschicht (156, 256, 356) ist, angeordnet ist.

10. Sekundärbatterie nach einem der Ansprüche 7 bis 9, **dadurch gekennzeichnet, dass** die Befestigungsplatte (155) zwei Formschlusselemente (155a), die in entgegengesetzten Ecken der Befestigungsplatte (155) angeordnet sind, aufweist.

11. Sekundärbatterie nach einem der Ansprüche 1 bis 10, **dadurch gekennzeichnet, dass** der erste Kollektoranschluss (122) einen Niet (122b), der sich durch die erste Anschlussplatte (123) erstreckt und mit dieser gekoppelt ist, aufweist.

12. Sekundärbatterie nach Anspruch 11, **dadurch gekennzeichnet, dass** der Niet (122b) durch Schweißen mit der ersten Anschlussplatte (123) gekoppelt ist.

13. Sekundärbatterie nach einem der Ansprüche 1 bis 12, **dadurch gekennzeichnet, dass** die Batterie einen zweiten Anschluss (130) mit einem zweiten Kollektoranschluss (132) aufweist, wobei der zweite Kollektoranschluss (132) durch die Deckplatte (151) hindurchgeht und elektrisch leitend mit einer zweiten Elektrodenplatte (112) verbunden ist, und mit einer zweiten Anschlussplatte (133), die am zweiten Kollektoranschluss (132) befestigt ist, wobei der zweite Anschluss eine Isolierplatte (157), die den zweiten Kollektoranschluss (132) elektrisch von der Deckplatte (151) isoliert, aufweist.

14. Verfahren zum Montieren einer Sekundärbatterie, wobei das Verfahren die Schritte des Koppelns eines ersten Kollektoranschlusses (122) eines ersten Anschlusses (120) mit einer Deckplatte (151) der Batterie, des Anordnens einer Befestigungsplatte (155) auf der Deckplatte (151) und des Koppelns der Befestigungsplatte (155) mit dem ersten Kollektoranschluss (122) und des Anordnens einer ersten Anschlussplatte (123) auf der Befestigungsplatte (155) aufweist, wobei das Verfahren den Schritt des Anordnens einer Isolierschicht (156, 256, 356) zwischen der Befestigungsplatte (155) und der Deckplatte (151) aufweist, **dadurch gekennzeichnet, dass** die Isolierschicht (156) einen Anlagebereich der Oberfläche der Befestigungsplatte (155) abschnittweise bedeckt, wobei der Anlagebereich an der Deckplatte (151) anliegt, und wobei sie einen anderen Abschnitt des Anlagebereichs nicht bedeckt.

## Revendications

1. Batterie secondaire comprenant :
un ensemble d'électrodes (110) ayant une première (111) et une deuxième (112) plaque d'électrode ;
un boîtier (140) recevant l'ensemble d'électrodes (110) dans son espace interne ;
une plaque de capuchon (151) couplée au boîtier (140) et scellant celui-ci ; et
une première borne (120) ayant une première borne de collecteur (122), la première borne de collecteur (122) traversant la plaque de capuchon (151) et étant reliée de manière électriquement conductrice à la première plaque d'électrode (111), et ayant une première plaque de borne (123) qui est fixée à la première borne de collecteur (122),
dans laquelle la première borne de collecteur (122) est reliée électriquement à la plaque de capuchon (151) par l'intermédiaire de la première plaque de borne (123) et d'une plaque de fixation (155), la plaque de fixation (155) étant agencée entre la plaque de capuchon (151) et la première plaque de borne (123), et
dans laquelle une couche isolante (156) est agencée sur au moins une surface de la plaque de fixation (155) qui fait face à la plaque de capuchon (151), **caractérisée en ce que** la couche isolante (156) couvre, par section, une zone de butée de la surface de la plaque de fixation (155), la zone de butée venant en butée sur la plaque de capuchon (151), et ne couvrant pas une autre section de la zone de butée.

2. Batterie secondaire selon la revendication 1, **caractérisée en ce que** la plaque de fixation (155) est formée avec un trou traversant (155b) à travers lequel passe la première borne de collecteur (122).

3. Batterie secondaire selon la revendication 2, **caractérisée en ce que** la couche isolante (156) s'étend entre le trou traversant (155b) et au moins un côté de la plaque de fixation (155) .

4. Batterie secondaire selon la revendication 2, **caractérisée en ce que** la couche isolante (256) s'étend depuis le trou traversant (155b) vers un coin de la plaque de fixation (155) .

5. Batterie secondaire selon la revendication 2, **caractérisée en ce que** la couche isolante (356) se présente sous la forme d'un cercle concentrique autour du trou traversant (155b).

6. Batterie secondaire selon l'une des revendications 1 à 5, **caractérisée en ce que** la couche isolante (156, 256, 356) est couplée à la plaque de fixation (155).

7. Batterie secondaire selon l'une des revendications 1 à 6, **caractérisée en ce que** la plaque de fixation (155) comprend un élément à complémentarité de forme (155a) et **en ce qu'**un contre-élément à complémentarité de forme (151c) est formé sur une surface de la plaque de capuchon (151), la plaque de fixation (155) étant couplée à la plaque de capuchon (151) de manière rigide en rotation par les éléments à complémentarité de forme (155a, 151c).

8. Batterie secondaire selon la revendication 7, **caractérisée en ce que** l'élément à complémentarité de forme (155a) se présente sous la forme d'une saillie de fixation (155a) et le contre-élément à complémentarité de forme se présente sous la forme d'un évidement de fixation (151c).

9. Batterie secondaire selon la revendication 7 ou 8, **caractérisée en ce que** l'élément à complémentarité de forme (155a) est agencé dans un coin de la plaque de fixation (155) qui est dépourvu de la couche isolante (156, 256, 356).

10. Batterie secondaire selon l'une des revendications 7 à 9, **caractérisée en ce que** la plaque de fixation (155) comprend deux éléments à complémentarité de forme (155a) qui sont agencés dans des coins opposés de la plaque de fixation (155) .

11. Batterie secondaire selon l'une des revendications 1 à 10, **caractérisée en ce que** la première borne de collecteur (122) comprend un rivet (122b) qui s'étend à travers la première plaque de borne (123) et est couplé à celle-ci.

12. Batterie secondaire selon la revendication 11, **caractérisée en ce que** le rivet (122b) est couplé à la première plaque de borne (123) par soudage.

13. Batterie secondaire selon l'une des revendications 1 à 12, la batterie étant **caractérisée en ce qu'**elle comprend une deuxième borne (130) ayant une deuxième borne de collecteur (132), la deuxième borne de collecteur (132) traversant la plaque de capuchon (151) et étant reliée de manière électriquement conductrice à une deuxième plaque d'électrode (112), et ayant une deuxième plaque de borne (133) qui est fixée à la deuxième borne de collecteur (132), la deuxième borne comprenant une plaque isolante (157) isolant électriquement la deuxième borne de collecteur (132) de la plaque de capuchon (151).

14. Procédé pour assembler une batterie secondaire, le procédé comprenant les étapes consistant à coupler une première borne de collecteur (122) d'une première borne (120) à une plaque de capuchon (151) de la batterie, à agencer une plaque de fixation (155) sur la plaque de capuchon (151) et à coupler la plaque de fixation (155) à la première borne de collecteur (122) et à agencer une première plaque de borne (123) sur la plaque de fixation (155), le procédé comprenant l'étape consistant à agencer une couche isolante (156, 256, 356) entre la plaque de fixation (155) et la plaque de capuchon (151), **caractérisé en ce que** la couche isolante (156) couvre, par section, une zone de butée de la surface de la plaque de fixation (155), la zone de butée venant en butée sur la plaque de capuchon (151), et ne couvrant pas une autre section de la zone de butée.
